# EUROPÄISCHE PATENTSCHRIFT

(11) **EP 3 338 064 B1**
(45) Veröffentlichungstag und Bekanntmachung des Hinweises auf die Patenterteilung: **16.09.2020**
(21) Anmeldenummer: 16742317.7
(22) Anmeldetag: 26.07.2016
(51) Int. Cl.: G01F 1/66, B06B 1/06, G01P 5/24

(54) **ULTRASCHALLWANDLER MIT EINEM HOHLRAUM UND VERFAHREN ZUR HERSTELLUNG EINES ULTRASCHALLWANDLERS**
ULTRASONIC TRANSDUCER WITH A CAVITY AND METHOD FOR PRODUCTION OF A ULTRASOUND TRANSDUCER
TRANSDUCTEUR ULTRASONORE AVEC UNE CAVITE ET PROCEDE DE PRODUCTION D'UN TRANSDUCTEUR ULTRASONORE

(30) Priorität: 17.08.2015 DE 102015113561
(43) Veröffentlichungstag der Anmeldung: 27.06.2018
(73) Patentinhaber: Endress+Hauser Flowtec AG, 4153 Reinach (CH)
(72) Erfinder: BEZDEK, Michal, 4147 Aesch (CH); UEBERSCHLAG, Pierre, 68300 Saint-Louis (FR); BERGER, Andreas, 79686 Hasel-Glashütten (DE); WANDELER, Frank, 5236 Remingen (CH)
(74) Vertreter: Andres, Angelika Maria
(86) Internationale Anmeldenummer: PCT/EP2016/067735
(87) Internationale Veröffentlichungsnummer: WO 2017/029078

(56) Entgegenhaltungen:
- DE-A1-102012 201 884
- DE-U1-202012 012 729
- DE-U1-202012 012 729
- US-B1- 7 954 387

## Beschreibung

Die Erfindung betrifft einen Ultraschallwandler umfassend einen akustischen Transformator sowie ein Verfahren zur Herstellung eines solchen akustischen Transformators.
Ultraschallwandler nach dem Stand der Technik setzen Piezowandler ein, um elektrische Signale in Druckschwankungen im Ultraschallfrequenzbereich umzuwandeln und umgekehrt. Diese Druckschwankungen werden des Weiteren von einem akustischen Transformator bidirektional zwischen einem Medium und dem Piezowandler übertragen. In einer möglichen Ausführung eines solchen Transformators werden die Druckschwankungen direkt zwischen Medium und Transformator übertragen. Nachteilhaft daran ist die Notwendigkeit einer Impedanzanpassung zwischen Transformator und Medium um die Übertragungseffizienz zu erhöhen. Dabei kommen häufig empfindliche Materialien zum Einsatz, was zu einer Einschränkung des Anwendungsbereichs der Ultraschallwandler führt. Eine Weiterentwicklung des akustischen Transformators umfasst eine mit dem Medium einer Rohrleitung in Kontakt stehenden, an ihrem Rand fixierten, schwingfähigen Membran. Diese Membran wird durch Druckschwankungen zu transversalen Schwingungen angeregt, womit die Notwendigkeit einer Impedanzanpassung aufgehoben ist. Die Schriften DE10341422A1, US6672166B2 und US3891869 offenbaren Ultraschallwandler mit solchen akustischen Transformatoren. Diese Ultraschallwandler sind des Weiteren dadurch gekennzeichnet, dass die Membran mit einem stabförmigen akustischen Treiber im Bereich des Membranzentrums gekoppelt ist. Nachteilhaft an einer solchen Ausführung eines Ultraschallwandlers ist der komplexe Aufbau und die Tatsache, dass die Membran aufgrund ihrer Kopplung mit dem Treiber im Bereich ihres Zentrums in ihrer Schwingfähigkeit eingeschränkt ist.
Die DE 102012201884 A1 beschreibt einen Schallwandler, bei welchem ein Piezoelement mittels mehrerer Verbindungselemente Kräfte auf eine Membran überträgt und diese somit zum Schwingen anregt.

Die US 7954387 B1 beschreibt einen Ultraschallwandler, bei welchem zwischen einem Piezoelement und einer Schallabstrahlfläche eine flüssige Übertragungsschicht angeordnet ist.
**Aufgabe der vorliegenden Erfindung** ist es, einen Ultraschallwandler mit einem vereinfachten Aufbau ohne Einschränkungen der Schwingfähigkeit sowie ein Verfahren zur Herstellung des Ultraschallwandlers zur Verfügung zu stellen. Die Aufgabe wird erfindungsgemäß gelöst durch eine Vorrichtung gemäß des unabhängigen Ultraschallwandlers in Anspruch 1 und durch Verfahren zur Herstellung des Ultraschallwandlers gemäß der unabhängigen Ansprüche 8 und 9.

**Die erfindungsgemäße Vorrichtung** wird durch einen Ultraschallwandler umgesetzt, welcher Ultraschallwandler mindestens einen Piezowandler zur Erzeugung und/oder Detektion von Ultraschallsignalen; und mindestens einen akustischen Transformator umfasst, wobei der mindestens eine akustische Transformator einen Transformatorkörper mit mindestens einem Hohlraum aufweist, wobei der akustische Transformator mit dem Piezowandler akustisch gekoppelt ist, wobei der mindestens eine Hohlraum zum Medium hin mit einer im Zentrum frei schwingenden Membran verschlossen ist. Die im Zentrum frei schwingende Membran und nur an ihrem Rand gelagerte Membran ist im Vergleich zum Stand der Technik in ihrer Schwingfähigkeit sehr viel weniger eingeschränkt. Während Membranen des Stands der Technik nur symmetrische Schwingungsmoden annehmen können, sind bei den erfindungsgemäßen Membranen auch Schwingungen mit antisymmetrischen Moden möglich. Außerdem ist die Schwingungsamplitude bei symmetrischen Moden im Zentralbereich maximal, wodurch die Abstrahlung mehr gerichtet in Richtung der Flächennormalen stattfindet.

Bei dem erfindungsgemäßen Ultraschallwandler ist der akustische Transformator dazu eingerichtet, Ultraschallsignale über die mindestens eine Membran zwischen den Piezowandler und dem Medium zu übertragen.

In einer Ausgestaltung des Ultraschallwandlers weist der mindestens eine Hohlraum mindestens eine Öffnung zum Medium, beispielsweise in der Mantelfläche oder insbesondere in der Stirnfläche auf. Diese mindestens eine Öffnung kann beispielsweise durch Bohren erzeugt sein, wobei diese mindestens eine Öffnung dazu eingerichtet ist, einen Druckausgleich zwischen dem Hohlraum und dem Medium in der Rohrleitung stattfinden zu lassen. Dadurch lässt sich eine Vorspannung der Membran durch Druckunterschiede vermeiden, so dass die Membran sehr dünn ausfallen kann und somit eine maximale Schwingfähigkeit der Membran gewährleistet ist. Des Weiteren führt ein fehlender Druckausgleich dazu, dass die Membran beim Schwingen in den Hohlraum hinein tendenziell eine geringere Schwingamplitude aufweist, als beim Schwingen in das Medium der Rohrleitung. Diese von der Schwingrichtung abhängige Amplitude verursacht nichtlineare Verzerrungen von Ultraschallsignalen, was bei einigen Anwendungen nachteilhaft sein kann.

In einer Ausgestaltung des Ultraschallwandlers ist der geometrische Aufbau des Ultraschallwandlers unter Nichtberücksichtigung der mindestens einen Hohlraumöffnung rotations- oder achsensymmetrisch bezüglich der Symmetrieachse 2.

In einer Ausgestaltung des Ultraschallwandlers ist der akustische Transformator aus einem keramischen oder glasartigen oder metallischen Material aufgebaut. Als metallische Materialien kommen beispielsweise Titan, Stahl oder Aluminium in Betracht. In einer Ausgestaltung des Ultraschallwandlers ist die Arbeitsfrequenz des Ultraschallwandlers mindestens 10 kHz und insbesondere mindestens 50 kHz und höchstens 10 MHz und insbesondere höchstens 500 kHz.
In einer Ausgestaltung des Ultraschallwandlers ist die Membrandicke des Ultraschallwandlers mindestens 0.01mm und insbesondere mindestens 0.1mm und höchstens 10mm und insbesondere höchstens 1 mm.
In einer Ausgestaltung des Ultraschallwandlers ist der mindestens eine Hohlraum zumindest teilweise durch ein Füllmaterial gefüllt, wobei das Füllmaterial ein Elastomer oder Schaum oder bevorzugterweise ein gießbarer Kunststoff oder insbesondere ein Metallpulver ist. Damit lässt sich das Schwingverhalten der Membran hinsichtlich der Schwingungsdämpfung beeinflussen.

**Ein erstes erfindungsgemäßes Verfahren** zur Fertigung eines akustischen Transformators eines Ultraschallwandlers, insbesondere eines erfindungsgemäßen Ultraschallwandlers zum Einsatz in Ultraschall-Durchflussmessgeräten zur Messung der Durchflussgeschwindigkeit oder dem Volumendurchfluss von Medien in einer Rohrleitung zeichnet sich dadurch aus, dass der akustische Transformator mittels eines generativen Verfahrens, in bevorzugter Weise durch ein 3D-Druckverfahren oder insbesondere durch selektives Laserschmelzen gefertigt wird.

**Ein zweites erfindungsgemäßes Verfahren** zur Fertigung eines akustischen Transformators eines Ultraschallwandlers, insbesondere eines erfindungsgemäßen Ultraschallwandlers zum Einsatz in Ultraschall-Durchflussmessgeräten zur Messung der Durchflussgeschwindigkeit oder dem Volumendurchfluss von Medien in einer Rohrleitung zeichnet sich dadurch aus, dass der akustische Transformator aus mehreren Einzelteilen gefertigt wird, wobei die Einzelteile durch einen kombinierenden Prozess wie beispielsweise Kleben oder insbesondere Schweißen kombiniert werden.

Es werden also durch die vorliegende Erfindung ein Ultraschallwandler, welcher Ultraschallwandler mindestens einen akustischen Transformator umfasst, und Verfahren zur Herstellung des mindestens einen akustischen Transformators vorgeschlagen.

Im Folgenden wird die Erfindung anhand von in Zeichnungen dargestellten beispielhaften Ausführungsformen näher erläutert.

Es zeigt:
Fig.1: eine perspektivische Außenansicht eines Ultraschallwandlergehäuses eines erfindungsgemäßen Ultraschallwandlers;
Fig.2 einen Querschnitt durch eine Ausführungsform des Ultraschallwandlers;
Fig.3 bis Fig.5.1: Querschnitte durch Ausführungsformen des akustischen Transformators, welcher akustische Transformator ein Bestandteil des U|traschallwandlergehäuses ist;
Fig.5.2: eine perspektivische Außenansicht der Ausführungsform Fig.5.1;
Fig.6 eine weitere Ausführungsform des Ultraschallwandlers;
Fig.7.1: eine perspektivische Außenansicht einer Ausführungsform des Ultraschallwandlergehäuses;
Fig.7.2: einen Querschnitt durch die Ausführungsform aus Fig.7.1;
Fig. 8 bis Fig. 11: Querschnitte durch Ausführungsformen des Ultraschallwandlers;
Fig. 12: eine schematische Skizze eines an einer Rohrleitung angebrachten Ultraschall-Durchflussmessgeräts.

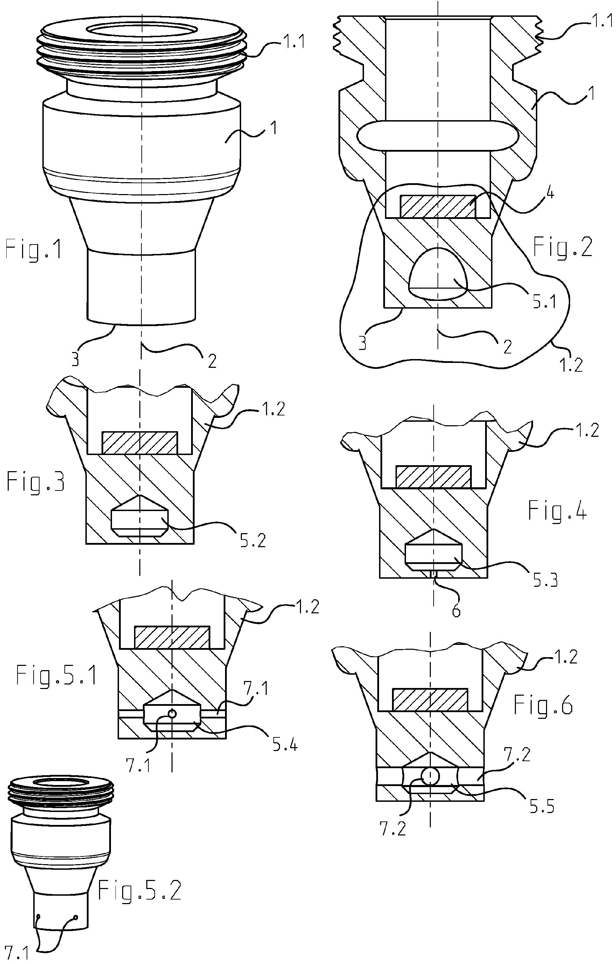

Die in Fig. 1 dargestellte perspektivische Außenansicht eines ersten Ausführungsbeispiels eines Ultraschallwandlergehäuses 1 zeigt ein Gehäuse mit einem Außengewinde 1.1 und einer stimseitigen Membran bzw. Schall-Ein/Austrittsfläche 3, wobei das Gehäuse unter Vernachlässigung des Außengewindes rotationssymmetrisch bezüglich einer Symmetrieachse 2 ist.

Der in Fig. 2 dargestellte Querschnitt durch das Ultraschallwandlergehäuse 1 zeigt einen im Innenbereich des Gehäuses am Gehäuse angebrachten Piezowandler 4, einen akustischen Transformator 1.2, welcher akustische Transformator ein Bestandteil des Ultraschallwandlergehäuses ist, sowie einen im akustischen Transformator befindlichen Hohlraum 5.1 mit gerundeten Hohlrauminnenflächen, wobei die zur Membran gerichtete Hohlrauminnenfläche eine Abflachung aufweist. Der in Fig. 3 dargestellte Querschnitt durch den akustischen Transformator 1.2 zeigt ein Ausführungsbeispiel 5.2 des im akustischen Transformator befindlichen Hohlraums, wobei die Querschnittsfläche des Hohlraums durch gerade Linien begrenzt ist.

Der in Fig. 4 dargestellte Querschnitt durch den akustischen Transformator 1.2 zeigt ein Ausführungsbeispiel des Hohlraums aus Fig.3, wobei der Hohlraum eine stirnseitige, axiale Öffnung aufweist.
Der in Fig. 5.1 dargestellte Querschnitt durch den akustischen Transformator 1.2 zeigt ein Ausführungsbeispiel des Hohlraum aus Fig.3, wobei der Hohlraum Öffnungen in seiner Mantelfläche aufweist.

Fig. 5.2 zeigt eine perspektivische Außenansicht des das Ausführungsbeispiel aus Fig. 5.1 umfassende Ultraschallwandlergehäuses mit zwei sichtbaren, in der Mantelfläche befindlichen Hohlraumöffnungen.

Der in Fig. 6 dargestellte Querschnitt durch den akustischen Transformator 1.2 zeigt ein Ausführungsbeispiel des Hohlraums aus Fig. 3 mit Öffnungen in seiner Mantelfläche, wobei der Durchmesser der Öffnungen einen wesentlichen Bestandteil der Hohlraumabmessungen ausmacht.

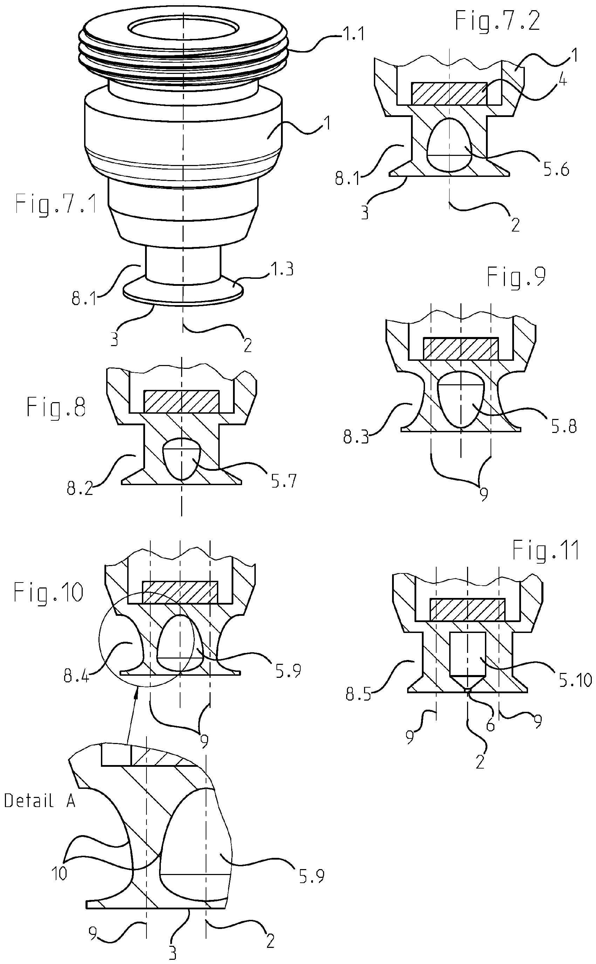

Die in Fig. 7.1 dargestellte perspektivische Außenansicht eines Ausführungsbeispiels des Ultraschallwandlergehäuses zeigt ein Gehäuse 1 mit einem Außengewinde 1.1 und einer Membran bzw. Schall-Ein/Austrittsfläche 3; wobei das Gehäuse unter Vernachlässigung des Außengewindes rotationssymmetrisch bezüglich der Symmetrieachse 2 ist; wobei das Gehäuse des Weiteren im Bereich der Membran 3 einen Einstich 8.1 und eine Flügelstruktur 1.3 aufweist.

Der in Fig. 7.2 dargestellte Querschnitt durch den akustischen Transformator 1.2 des in Fig. 7.1 dargestellten Ultraschallwandlergehäuses weist einen im Innenbereich des Gehäuses am Gehäuse angebrachten Piezowandler 4 und einen im akustischen Transformator 1.2 befindlichen Hohlraum 5.6 auf, wobei die Membran teilweise der Flügelstruktur 1.3 zugeordnet ist.

Der in Fig. 8 dargestellte Querschnitt durch den akustischen Transformator 1.2 zeigt eine weitere Ausführungsform 5.7 des im akustischen Transformator befindlichen Hohlraums mit gerundeten Hohlrauminnenflächen, wobei die von der Membran 3 abgewandte Hohlraumseite eine Abflachung aufweist.

Der in Fig. 9 dargestellte Querschnitt durch den akustischen Transformator 1.2 zeigt eine weitere Ausführungsform des akustischen Transformators, wobei im Querschnitt die Mantelflächenkontur zur zugehörigen Hohlrauminnenflächenkontur bezüglich der jeweiligen Kontur-Symmetrie-Achse 9 symmetrisch ist.

Der in Fig. 10 dargestellte Querschnitt durch den akustischen Transformator 1.2 zeigt eine Ausführungsform nach Fig. 9 mit einer anderen Hohlraumgeometrie mit einer in der Detailansicht A vergrößert dargestellten Mantelflächenkontur.

Der in Fig. 11 dargestellte Querschnitt durch den akustischen Transformator 1.2 zeigt eine Ausführungsform nach Fig. 9 oder Fig. 10 mit einer anderen Hohlraumgeometrie und einer stimseitigen, axialen Öffnung der Membran.

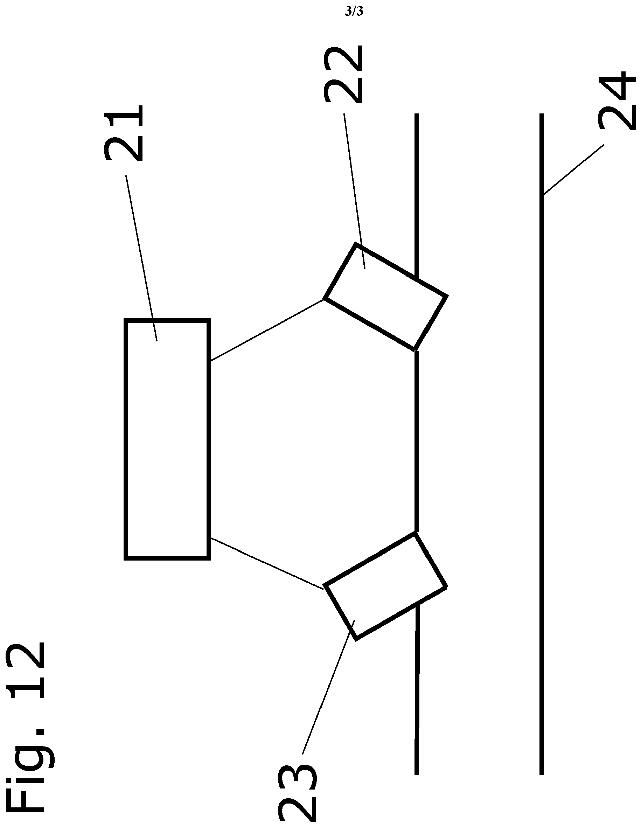

Das in Fig. 12 schematisch dargestellte Ultraschall-Durchflussmessgerät umfasst zwei Ultraschallwandler 22, 23, welche mit einer Rohrleitung 24 in Kontakt stehen, welche Rohrleitung von einem Medium durchflossen ist.

### Bezugszeichenliste

- 1: Ultraschallwandlergehäuse
- 1.1: Außengewinde
- 1.2: akustischer Transformator
- 1.3: Flügelstruktur
- 2: Symmetrieachse
- 3: Membran / Schall-Ein/Austrittsfläche
- 4: Piezowandler
- 5.1- 5.10: Hohlraum Ausführungsform 1-10
- 6: Axiale Öffnung
- 7.1 u. 7.2: Radiale Öffnung (Z.B. Bohrung)
- 8.1- 8.5: Einstich Ausführungsform 1-5
- 9: Kontur-Symmetrie-Achse
- 10: Symmetrische Kontur
- 21: elektronische Betriebsschaltung
- 22, 23: Ultraschallwandler
- 24: Rohrleitung

## Patentansprüche

1. Ultraschallwandler (22, 23) zum Einsatz in Ultraschall-Durchflussmessgeräten zur Messung der Durchflussgeschwindigkeit oder dem Volumendurchfluss von Medien in einer Rohrleitung (24), umfassend:
mindestens einen Piezowandler (4) zur Erzeugung und/oder Detektion von Ultraschallsignalen;
einen akustischen Transformator (1.2), wobei der akustische Transformator einen Transformatorkörper aufweist, wobei der akustische Transformator mit dem Piezowandler akustisch gekoppelt ist,
**dadurch gekennzeichnet, dass**
der Transformatorkörper mindestens einen Hohlraum (5.1-5.10) aufweist, wobei der mindestens eine Hohlraum zum Medium hin mit einer im Zentrum frei schwingenden Membran (3) verschlossen ist,
wobei der akustische Transformator (1.2) dazu eingerichtet ist, Ultraschallsignale über die Membran (3) zwischen dem Piezowandler (4) und dem Medium zu übertragen.

2. Ultraschallwandler nach Anspruch 1,
**dadurch gekennzeichnet, dass** der mindestens eine Hohlraum (5.1 - 5.10) mindestens eine Öffnung (6, 7.1, 7.2) zum Medium aufweist.

3. Ultraschallwandler nach Anspruch 1 oder 2,
**dadurch gekennzeichnet, dass** der geometrische Aufbau des Ultraschallwandlers unter Nichtberücksichtigung der mindestens einen Hohlraumöffnung (6, 7.1, 7.2) rotations- oder achsensymmetrisch bezüglich der Symmetrieachse (2) ist.

4. Ultraschallwandler nach einem der vorherigen Ansprüche,
**dadurch gekennzeichnet, dass** der akustische Transformator (1.2) aus einem keramischen oder glasartigen oder metallischen Material aufgebaut ist.

5. Ultraschallwandler nach einem der vorherigen Ansprüche,
**dadurch gekennzeichnet, dass** die Arbeitsfrequenz des Ultraschallwandlers mindestens 10 kHz, wobei die Arbeitsfrequenz des Ultraschallwandlers höchstens 10 MHz.

6. Ultraschallwandler nach einem der vorherigen Ansprüche,
**dadurch gekennzeichnet, dass** die Membrandicke des Ultraschallwandlers mindestens 0.01 mm, wobei die Membrandicke des Ultraschallwandlers höchstens 10 mm.

7. Ultraschallwandler nach einem der vorherigen Ansprüche,
**dadurch gekennzeichnet, dass** der mindestens eine Hohlraum (5.1 - 5.10) zumindest teilweise durch ein Füllmaterial gefüllt ist, wobei das Füllmaterial ein Elastomer oder Schaum oder ein gießbarer Kunststoff oder ein Metallpulver ist.

8. Verfahren zur Fertigung eines akustischen Transformators (1.2) eines Ultraschallwandlers (22, 23) zum Einsatz in Ultraschall-Durchflussmessgeräten zur Messung der Durchflussgeschwindigkeit oder dem Volumendurchfluss von Medien in einer Rohrleitung (24) nach einem der Ansprüche 1-7, **dadurch gekennzeichnet, dass**
der akustische Transformator (1.2) mittels eines generativen Verfahrens gefertigt wird.

9. Verfahren zur Fertigung eines akustischen Transformators (1.2) eines Ultraschallwandlers zum Einsatz in Ultraschall-Durchflussmessgeräten zur Messung der Durchflussgeschwindigkeit oder dem Volumendurchfluss von Medien in einer Rohrleitung nach einem der Ansprüche 1-7, **dadurch gekennzeichnet, dass** der akustische Transformator (1.2) aus mehreren Einzelteilen gefertigt wird, wobei die Einzelteile durch einen kombinierenden Prozess kombiniert werden.

## Claims

1. Ultrasonic transducer (22, 23) designed for use in ultrasonic flowmeters to measure the flow velocity or the volume flow of media flowing in a pipe (24), said transducer comprising:
at least a piezoelectric transducer (4) designed to generate and/or detect ultrasonic signals;
an acoustic transformer (1.2), wherein the acoustic transformer has a transformer body, wherein the acoustic transformer is acoustically coupled to the piezoelectric transducer,
**characterized in that**
the transformer body has at least a cavity (5.1-5.10),
wherein the at least one cavity is sealed towards the medium via a membrane (3) freely oscillating in the centre,
wherein the acoustic transformer (1.2) is designed to transmit ultrasonic signals via the membrane (3) between the piezoelectric transducer (4) and the medium.

2. Ultrasonic transducer as claimed in Claim 1,
**characterized in that** the at least one cavity (5.1 - 5.10) has at least one opening (6, 7.1, 7.2) towards the medium.

3. Ultrasonic transducer as claimed in Claim 1 or 2,
**characterized in that** the geometric structure of the ultrasonic transducer is rotationally or axially symmetric in relation to the symmetrical axis (2) if the at least one cavity opening (6, 7.1, 7.2) is not taken into account.

4. Ultrasonic transducer as claimed in one of the previous claims, **characterized in that** the acoustic transformer (1.2) is made from a ceramic or glass or metal material.

5. Ultrasonic transducer as claimed in one of the previous claims, **characterized in that** the operating frequency of the ultrasonic transducer is at least 10 kHz, wherein the operating frequency of the ultrasonic transducer is at maximum 10 MHz.

6. Ultrasonic transducer as claimed in one of the previous claims, **characterized in that** the membrane thickness of the ultrasonic transducer is at least 0.01 mm, wherein the membrane thickness of the ultrasonic transducer is at maximum 10 mm.

7. Ultrasonic transducer as claimed in one of the previous claims, **characterized in that** the at least one cavity (5.1 - 5.10) is at least partially filled with a filling material, wherein the filling material is an elastomer or a foam or a castable plastic or a metal powder.

8. Procedure for the production an acoustic transformer (1.2) of an ultrasonic transducer (22, 23) for use in ultrasonic flowmeters to measure the flow velocity or the volume flow of media in a pipe (24) as claimed in one of the Claims 1-7, **characterized in that** the acoustic transformer (1.2) is produced by means of a generative process.

9. Procedure for the production an acoustic transformer (1.2) of an ultrasonic transducer for use in ultrasonic flowmeters to measure the flow velocity or the volume flow of media in a pipe as claimed in one of the Claims 1-7, **characterized in that** the acoustic transformer (1.2) is made from several individual parts, wherein the individual parts are combined by a combining process.

## Revendications

1. Convertisseur à ultrasons (22, 23) destiné à une utilisation dans des débitmètres à ultrasons pour la mesure de la vitesse d'écoulement ou du débit volumique de produits s'écoulant dans une conduite (24), lequel convertisseur comprend :
au moins un transducteur piézoélectrique (4) destiné à la génération et/ou à la détection de signaux ultrasonores ;
un transformateur acoustique (1.2), le transformateur acoustique présentant un corps de transformateur, le transformateur acoustique étant couplé acoustiquement au transducteur piézoélectrique,
**caractérisé**
**en ce que** le corps de transformateur présente au moins une cavité (5.1-5.10), l'au moins une cavité étant obturée par rapport au produit au moyen d'une membrane (3) oscillant librement au centre,
le transformateur acoustique (1.2) étant conçu pour transmettre des signaux ultrasonores via la membrane (3) entre le transducteur piézoélectrique (4) et le produit.

2. Convertisseur à ultrasons selon la revendication 1,
**caractérisé en ce que** l'au moins une cavité (5.1 - 5.10) présente au moins une ouverture (6, 7.1, 7.2) par rapport au produit.

3. Convertisseur à ultrasons selon la revendication 1 ou 2,
**caractérisé en ce que** la structure géométrique du convertisseur à ultrasons, abstraction faite de l'au moins une ouverture de cavité (6, 7.1, 7.2), présente une symétrie de révolution ou axiale par rapport à l'axe de symétrie (2).

4. Convertisseur à ultrasons selon l'une des revendications précédentes, **caractérisé en ce que** le transformateur acoustique (1.2) est constitué d'un matériau céramique, vitreux ou métallique.

5. Convertisseur à ultrasons selon l'une des revendications précédentes, **caractérisé en ce que** la fréquence de travail du convertisseur à ultrasons est d'au moins 10 kHz, la fréquence de travail du convertisseur à ultrasons étant au maximum de 10 MHz.

6. Convertisseur à ultrasons selon l'une des revendications précédentes, **caractérisé en ce que** l'épaisseur de la membrane du convertisseur à ultrasons est d'au moins 0,01 mm, l'épaisseur de la membrane du convertisseur à ultrasons étant au maximum de 10 mm.

7. Convertisseur à ultrasons selon l'une des revendications précédentes, **caractérisé en ce que** l'au moins une cavité (5.1 - 5.10) est remplie au moins partiellement d'un matériau de remplissage, le matériau de remplissage étant un élastomère ou une mousse ou un plastique coulable ou une poudre métallique.

8. Procédé destiné à la fabrication d'un transformateur acoustique (1.2) d'un convertisseur à ultrasons (22, 23) destiné à une utilisation dans des débitmètres à ultrasons pour la mesure de la vitesse d'écoulement ou du débit volumique de produits s'écoulant dans une conduite selon l'une des revendications 1 à 7, **caractérisé en ce que** le transformateur acoustique (1.2) est fabriqué au moyen d'un procédé génératif.

9. Procédé destiné à la fabrication d'un transformateur acoustique (1.2) d'un convertisseur à ultrasons destiné à une utilisation dans des débitmètres à ultrasons pour la mesure de la vitesse d'écoulement ou du débit volumique de produits s'écoulant dans une conduite selon l'une des revendications 1 à 7, **caractérisé en ce que** le transformateur acoustique (1.2) est fabriqué à partir de plusieurs composants individuels, les composants individuels étant combinés par le biais d'un processus de combinaison.
